# EUROPÄISCHE PATENTSCHRIFT

(11) **EP 1 653 306 B1**
(45) Veröffentlichungstag und Bekanntmachung des Hinweises auf die Patenterteilung: **31.08.2011**
(21) Anmeldenummer: 05023199.2
(22) Anmeldetag: 25.10.2005
(51) Int. Cl.: G05B 19/042, G05B 19/418

(54) **Verfahren zum Bedienen eines Feldgerätes der Automatisierungstechnik**
Method for operating a field device in automation technology
Procédé de commande d' un dispositif de terrain de la technique d'automatisation

(30) Priorität: 28.10.2004 DE 102004052488
(43) Veröffentlichungstag der Anmeldung: 03.05.2006
(73) Patentinhaber: Endress + Hauser Process Solutions AG, 4153 Reinach BL (CH)
(72) Erfinder: De Groot, Vincent, 68300 St. Louis (FR); Korsten, Klaus, 79585 Steinen (DE)
(74) Vertreter: Andres, Angelika Maria

(56) Entgegenhaltungen:
- WO-A1-02/05241
- WO-A1-2004/042482
- WO-A2-2004/029895
- FDT JOINT INTEREST WORKING GROUP: "FDT Interface Specification Version 1.2" INTERNET CITATION 31. Mai 2001 (2001-05-31), XP002469167 Gefunden im Internet: URL:www.fdt-jig.org/_downloads/04_2004/FDT _Spec_V12_+_Addendum.zip [gefunden am 2008-02-14]

## Beschreibung

Die Erfindung betrifft ein zum Bedienen eines Feldgerätes der Automatisierungstechnik.

In der Prozessautomatisierungstechnik werden vielfach Feldgeräte eingesetzt, die zur Erfassung und / oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Neben derartigen reinen Messgeräten sind auch Systeme bekannt, die noch zusätzliche weitere Aufgaben erfüllen. Zu nennen sind hier Elektrodenreinigungssysteme, Kalibriersysteme sowie Probennehmer.

Ebenfalls als Feldgeräte werden Ein-/Ausgabeeinheiten so genannte Remote I/Os sowie Verbindungseinheiten (z. B. Gateways) oder Controller bezeichnet. Allgemein kann man alle prozessnah eingesetzte Einheiten, die Prozessinformationen liefern oder verarbeiten, als Feldgeräte bezeichnet.

Zur Beeinflussung von Prozessvariablen dienen so genannte Aktoren, z. B. Ventile, die den Durchfluss einer Flüssigkeit in einem Rohrleitungsabschnitt steuern oder Pumpen, die den Füllstand in einem Behälter ändern.

Eine Vielzahl solcher Feldgeräte wird u. a. von der Fa. Endress + Hauser® hergestellt und vertrieben.

Häufig sind Feldgeräte über einen Feldbus (Profibus®, Foundation®-Fieldbus, HART® etc.) mit übergeordneten Einheiten z. B. Leitsystemen bzw.

Steuereinheiten verbunden. Diese übergeordneten Einheiten dienen zur Prozesssteuerung, Prozessvisualisierung, Prozessüberwachung.

Zur Bedienung der Feldgeräte sind entsprechende Bedienprogramme (Bedientools) notwendig, die entweder eigenständig ablaufen wie z. B. das Programm FieldCare der Fa. Endress+Hauser oder aber in Leitsysteme integriert sein können.

Eine eingeschränkte Bedienung von Feldgeräten ist mit herkömmlichen vielfach in der Prozessautomatisierungstechnik noch eingesetzten Bedientools, die auf Gerätebeschreibungen (Device Descriptions) aufbauen, möglich. Als Beispiele für solche Gerätebeschreibungen sind die HART® Device Descriptions zu nennen, die es erlauben einfache Funktionalitäten der Feldgeräte anwenderunabhängig zu beschreiben.

Für eine vollumfängliche Bedienung der Feldgeräte müssen alle Funktionen und Parameter einschließlich der graphischen Bedienelemente dem Bedienprogramm (Bedientool) bekannt gemacht werden.

Dies ist über spezielle Feldgerätetreiber, die den FDT (Field Device Tool)-Spezifikationen entsprechen, möglich. Diese Feldgerätetreiber werden als Device Type Manager (DTM) oder auch als Feldgeräte DTMs bzw. Geräte DTMs bezeichnet.

Die als Industriestandard geltenden FDT-Spezifikationen wurden von der PNO Profibus® Nutzerorganisation in Zusammenarbeit mit dem ZVEI (Zentralverband Elektrotechnik- und Elektronikindustrie) entwickelt. Die aktuelle FDT-Spezifikation1.2 ist über den ZVEI bzw. die PNO bzw. die FDT-JIG Joint Interest Group erhältlich.

Viele Feldgerätehersteller stellen deshalb zur komfortablere Bedienung ihrer Feldgeräten als Gerätetreiber Feldgeräte DTMs (Device Type Manager) zur Verfügung, die alle Daten und Funktionen des jeweiligen Feldgeräts kapseln und die dem Anwender eine graphische Benutzeroberfläche bieten.

Mit Hilfe dieser Feldgerätetreiber ist eine geräte- und herstellerübergreifende Bedienung von Feldgeräten mit den entsprechenden Bedienprogrammen möglich (wie z.B. in der Patentschrift WO2004/042482A1).

Die Feldgerätetreiber benötigen als Laufzeitumgebung eine Rahmen-Applikation (FDT-Frame-Application). Sie ermöglichen u. a. einen Zugriff auf verschiedene Daten der Feldgeräte (z.B. Geräteparameter, Messwerte, Diagnoseinformationen, Statusinformationen etc.) sowie den Aufruf von speziellen Funktionen, die einzelne Feldgerätetreiber zur Verfügung stellen.

Rahmen-Applikation und Feldgerätetreiber DTM arbeiten nach dem Client-Server Prinzip.

In der Regel erfolgt die Kommunikation mit Feldgeräten über das Feldbussystem. Hierfür ist eine entsprechende Feldbusschnittstelle am Feldgerät notwendig.

Einige Feldgeräte weisen neben der Feldbusschnittstelle noch eine weitere Schnittstelle für Servicezwecke, die deshalb allgemein als Serviceschnittstelle bezeichnet wird, auf. Über diese Schnittstelle ist ein direkter Datenzugriff am Feldgeräte möglich.

Über die Serviceschnittstelle kann z. B. die Software im Feldgerät ausgetauscht werden. Dieser Vorgang wird auch als Firmware Update bezeichnet. Hierzu wird eine separate Einheit z. B. ein tragbarer Kleinrechner (z.B. Laptop, Pocket PC, Handheld etc,) vor Ort mit der Serviceschnittstelle am Feldgerät über ein Verbindungskabel und optionalen Schnittstellewandler angeschlossen. Über diese Kommunikationsverbindung wird die neue Software dann vom Kleinrechner in das Feldgerät übertragen. Nach einer erfolgreichen vollständigen Übertragung kann die neue Software dann im Feldgerät ausgeführt werden.

Ein Softwareaustausch ist notwendig, wenn die ursprüngliche Software fehlerhaft ist oder wenn neue Funktionalitäten für das Feldgerät implementiert werden sollen.

Zur Kommunikation mit einem Feldgerät über die Serviceschnittstelle werden heute meist herstellerspezifische d. h. proprietäre Programmwerkzeuge (Tools) bzw. Bediengeräte (Handhelds) eingesetzt, die entweder nur für eine Feldgerätegattung oder für die Feldgeräte eines Herstellers zur Verfügung stehen. In der Regel werden von den verschiedenen Herstellern unterschiedliche Protokolle bei ihren Serviceschnittstellen eingesetzt.
Neben dem Laden von Software ins Feldgerät kann über eine solche Serviceschnittstelle das Feldgerät auch bedient werden.

Zum Bedienen von Feldgeräten unterschiedlicher Hersteller sind heutzutage unterschiedliche Bedientools notwendig. Dies ist für den Anwender sowie für den Feldgerätehersteller sehr aufwendig.

Von der Firma Vega sind Geräte DTMs bekannt, die sowohl Profibus wie auch ein proprietäres Prototoll (Vega VVO), das eine Bedienung über eine Seviceschnittstelle erlaubt, unterstützen.

Um eine Bedienung von Feldgeräten über die Serviceschnittstelle im Rahmen des FDT/DTM-Konzepts zu ermöglichen, müssen zum einen die Feldgeräte-DTMs, die die Funktionalität der Feldgeräte kapseln, geändert werden und zum anderen müssen die entsprechenden Kommunikations-DTM (COMM-DTM) erzeugt werden.
Der Aufwand für die Erstellung eines Kommunikations DTMs für eine herstellerspezifische Serviceschnittstelle mit einem proprietären Protokoll ist relativ hoch.

Einen hohen Aufwand würde es auch bedeuten, die bereits bestehenden Feldgeräte-DTMs eines Herstellers abzuändern. Dieses liegt zum einen in der Tatsache, dass unterschiedliche Protokolle teilweise verschiedene Parameter in den Feldgeräten bereitstellen. Gerade diese müssen in den verschiedenen DTMs abgebildet werden. Außerdem müssten die bereits im Einsatz befindlichen verschiedenen Feldgeräte-DTMs aufwendig ausgetauscht werden. Das Abändern von Feldgeräte DTMs kann dazu führen, dass ein neuer Feldgeräte DTM notwendig wird, welcher speziell für die Serviceschnittstelle geeignet ist. Mann kann alternativ auch einen eventuell bereits vorhanden Feldgeräte-DTM um eine zusätzliche FDT Schnittstelle erweitern, welche die Serviceschnittstelle unterstützt.

Aufgabe der Erfindung ist es deshalb ein einfaches Verfahren zum Bedienen eines Feldgerätes über die Serviceschnittstelle anzugeben, bei dem die vorhandenen Treiber weiterbenutzt werden können.

Gelöst wird diese Aufgabe durch das im Anspruch 1 angegebene Verfahren.

Vorteilhafte Weiterentwicklungen sind in den Unteransprüchen angegeben.

Die wesentliche Idee der Erfindung besteht darin, dass die Daten-Telegramme des verwendeten Feldbusprotokolls über die Serviceschnittstelle mit Hilfe des spezifischen Serviceschnittstelleprotokolls transportiert werden. Der Kommunikations DTM extrahiert die Feldbus-Datentelegramme aus dem Serviceschnittstelleprotokoll und bietet sie dem Feldgeräte DTM an. Damit ist es nicht mehr notwendig einen neuen oder geänderten Feldgeräte DTMs für die Feldgerätebedienung über die Serviceschnittstelle zu erstellen. Um zu vermeiden dass Feldgeräte DTMs für Feldgeräte ohne Serviceschnittstelle mit dem Kommunikations DTM für den Serviceschnittstelle verbunden werden, gibt es ein neues Kommunikations FDT Schnittstellen Schema . Dieses Schema ist gleich an dem jeweilige Schema für das Feldbus-Protokoll, es hat aber eine andere Identifikation.

Nachfolgend ist die Erfindung anhand eines in der Zeichnung dargestellten Ausführungsbeispiels näher erläutert.

Es zeigen:
- Fig. 1: schematische Darstellung eines Netzwerks der Prozessautomatisierungstechnik mit mehreren Feldgeräten;
- Fig. 2: schematische Darstellung einer herkömmlichen Kommunikationsverbindung zwischen einem Bedienprogramm und mehreren Feldgeräten;
- Fig. 3: schematische Darstellung einer alternativen Kommunikationsverbindung zwischen einem Bedienprogramm und einem Feldgerät, das eine Profibus-Schnittstelle und eine Service-Schnittstelle für eine USB-Verbindung aufweist.
- Fig. 4: schematische Darstellung einer alternativen Kommunikationsverbindung zwischen einem Bedienprogramm und einem Feldgerät, das eine Profibus-Schnittstelle und eine Service-Schnittstelle für eine Funk-Verbindung aufweist
- Fig. 5: schematische Darstellung einer alternativen Kommunikationsverbindung zwischen einem Bedienprogramm und einem Feldgerät, das eine HART-Schnittstelle und eine Service-Schnittstelle für eine USB-Verbindung aufweist

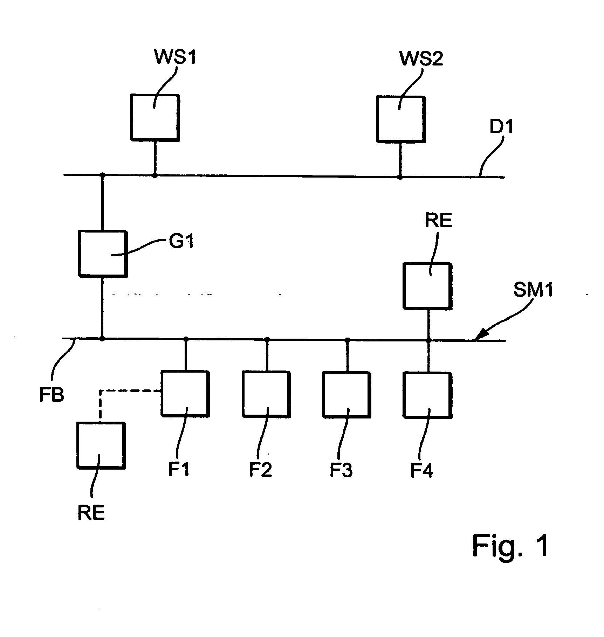

In Fig. 1 ist ein Kommunikationsnetzwerk der Prozessautomatisierungstechnik näher dargestellt. An einen Datenbus D1 sind mehrere Rechnereinheiten (Workstations) WS1, WS2 angeschlossen. Diese Rechnereinheiten können als übergeordnete Einheiten (Leitsystem bzw. Steuereinheit) zur Prozessvisualisierung, Prozessüberwachung und zum Engineering aber auch zum Bedienen und Überwachen sowie zur Diagnose und Verwaltung von Feldgeräten dienen. Der Datenbus D1 arbeitet z. B. nach dem Profibus® DP-Standard oder nach dem HSE (High Speed Ethernet)- Standard der Foundation® Fieldbus. Über ein Gateway G1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus®, Foundation® Fieldbus oder HART®. An den Feldbus FB ist eine Rechnereinheit RE angeschlossen, die auch direkt mit einem Feldgerät z. B. F1 verbunden werden kann.

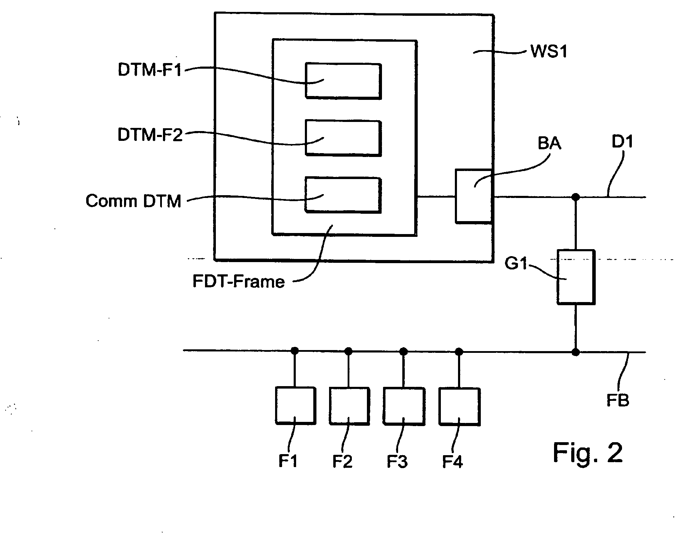

In Fig. 2 ist ein Bedienprogramm, das auf einer der Steuereinheiten WS1, WS2 bzw. auf der Rechnereinheit RE abläuft, schematisch dargestellt. Bei dem Bedienprogramm kann es sich z.B. um die Bediensoftware PACTware (PACTware Konsortium e.V.) oder FieldCare® (Firma Endress + Hauser®) handeln, die beide als Betriebssystem Microsoft Windows® 98, NT, XP oder 2000 benötigen und die als FDT-Frame-Applikation dienen. Die Rahmen-Applikation FDT-Frame ist insbesondere verantwortlich für die Verwaltung der Feldgeräte DTMs in einer Projektdatenbank (projekt database) für die Kommunikation zu den Bussystemen, für die Verwaltung des gesamten DTM-Katalogs, sowie für die Verwaltung der Benutzer und der Zugriffsrechte etc..

In die Rahmen- Applikation FDT-Frame sind mehrere Feldgerätetreiber eingebunden. Der Übersichtlichkeit halber sind nur zwei Feldgeräte-DTMs DTM-F1, DTM-F2 und ein Kommunikations-DTM CommDTM dargestellt. Wie bereits erwähnt kapselt der Feldgeräte-DTM DTM-F1 die Daten und Funktionen des Feldgerätes F1 und benötigt als Laufzeitumgebung die FDT-Frame-Applikation.

Mit Hilfe der Feldgeräte DTMs ist eine feldgeräte- und herstellerübergreifende Bedienung der Feldgeräte über eine entsprechende Kommunikationsverbindung möglich. So erlaubt der Feldgeräte DTM DTM-F1 den Zugriff auf verschiedene Feldgeräteparameter, die Konfiguration des Feldgerätes und den Abruf von Diagnosedaten und Statusinformationen mittels einer herstellerspezifischen graphischen Benutzeroberfläche, die die Bedienung für den Anwender erheblich erleichtert.

Die Kommunikationsverbindung kann auch über mehrere Bussysteme oder Kommunikationsnetze aufgebaut werden (nested communication).

Das FDT-Konzept basiert darauf, dass in eine FDT-Frame-Applikation unterschiedliche Feldgeräte von unterschiedlichen Herstellern über die entsprechenden Feldgeräte-DTMs in einfacher Weise eingebunden werden können.

Hardwaremäßig erfolgt die Verbindung zwischen der Rechnereinheit WS1 und dem Feldgerät F1 über eine Busanschaltung BA, den Datenbus D1, das Gateway G1 und den Feldbus FB.

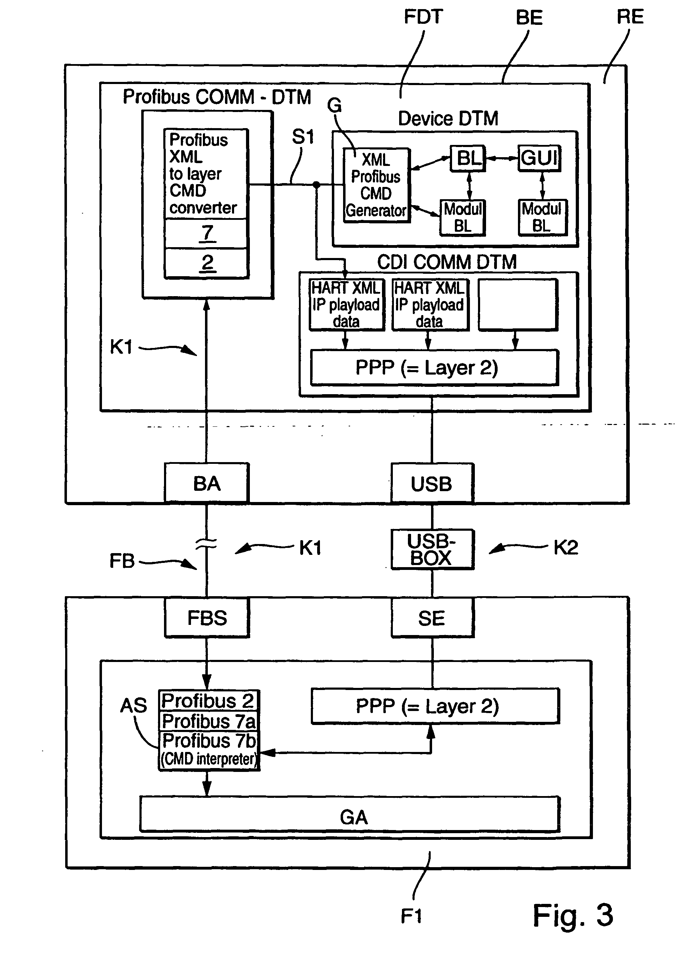

Fig. 3 zeigt eine erfindungsgemäße Kommunikationsverbindung zwischen einer Rechnereinheit RE und einem Feldgerät, z. B. dem Feldgerät F1 über eine Serviceschnittstelle.

Bei der Rechnereinheit RE handelt es sich um einen Kleinrechner (Laptop etc.). Die Rechnereinheit RE ist direkt mit dem Feldbus FB (hier ein Profibus) verbunden und nicht, wie die anderen Rechnereinheiten WS1 und WS2 mit dem Datenbus D1.
Die Erfindung ist ohne Einschränkung auch für tragbare Rechnereinheiten geeignet, die an den Datenbus D1 angeschlossen werden können.

Das Bedienprogramm BE umfasst drei Feldgerätetreiber DTM, einen Kommunikations DTM "Profibus Com DTM", einen Feldgeräte DTM für das Feldgerät F1 "DTM-F1" und einen weiteren Kommunikations DTM, den "CDI Comm DTM". Der Feldgeräte DTM "DTM-F1" und der Profibus Kommunikations DTM "Profibus Com DTM" sind über eine Schnittstelle S1 verbunden.

Der Kommunikations DTM "Profibus Com DTM" ist im Wesentlichen für die Kommunikation Rechnereinheit RE - Feldgerät F1 über einen Kommunikationskanal K1 verantwortlich. Der Kommunikationskanal K1 führt über die Busanschaltung BA, bei der es sich hier um eine Profibus-Anschaltung handelt, und den Feldbus FB zum Feldgerät F1.

Neben dem Kommunikationskanal K1 ist ein weiterer Kommunikationskanal K2 zwischen Rechnereinheit RE und Feldgerät F1 vorgesehen. Für die Kommunikation über den Kommunikationskanal K2 ist ein Kommunikations DTM "CDI Com DTM" vorgesehen. Der Kommunikationskanal K1 führt über eine an der Rechnereinheit RE vorgesehene USB-Schnittstelle USB und eine Kabelverbindung mit einer USB (Universal Serial Bus)-Kommunikationseinheit USB-Box zur einer Serviceschnittstelle SE des Feldgeräts F1.

Als Softwarekomponenten sind im Feldgerät F1 eine Feldgeräteapplikation GA vorgesehen, sowie verschiedene Schichten nach dem OSI-Modell dargestellt. Das allgemein bekannte und anerkannte OSI (International Organisation for Standardisation)-Schichtenmodell (ISO/IEC 7498-1:1994) oder DIN (Deutsche Industrie Norm) DIN ISO 7498 beschreibt die Architektur von Rechnernetzen mit normalerweise sieben Schichten und legt fest, welche Protokolle und Dienste in den einzelnen Schichten verwendet werden können. Dargestellt ist die Profibus Sicherungsschicht 2 (Verbindugsschicht/Data Link) sowie die Profibus-Anwendungsschicht 7 (Anwendungsschicht/Application-layer). Die Profibus-Anwendungsschicht 7 ist in zwei Teilschichten 7a und 7b unterteilt, wobei die Teilschicht 7b noch einen Interpreter für Profibuskommandos "CMD Interpreter" umfasst. Bei den Feldgerätetreibern handelt es sich jeweils um Softwareobjekte mit entsprechenden definierten Schnittstellen. Das Feldgeräte DTM "DTM-F1" umfasst üblicherweise eine Business-Logik BL und eine graphische Oberfläche GUI (Graphical User Interface) mit den entsprechenden Modulen Modul BL, Modul GUI. Die einzelnen Module kommunizieren untereinander sowie mit einem Generator G. Dieser Generator G erzeugt XML-Dokumente (Extended Markup Language), die über die Schnittstellen ausgetauscht werden. Die Sprache XML dient beim FDT/DTM-Standard als Schnittstellensprache.

Die komponentenorientierte Softwarestruktur entsprechend dem FDT/DTM-Standard hat viele Vorteile. Sie benötigt anfangs einen gewissen Aufwand bei der Schnittstellendefinition, erleichtert aber die spätere Programmierarbeit erheblich.

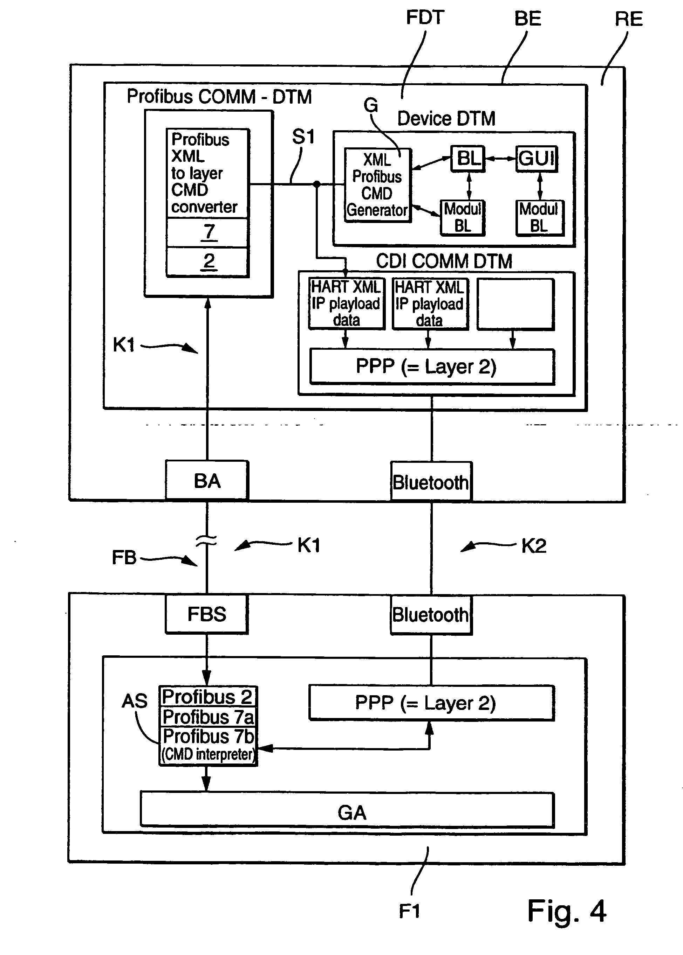

In Fig. 4 ist im Unterschied zu der Darstellung in Fig. 3 eine Funkverbindung zwischen Rechnereinheit RE und Feldgerät F1 vorgesehen, die nach dem Bluetooth®-IEEE (Institute of Electrical and Electronics Engineers) Standard 802.15 arbeitet. Dies erfordert nur geringe Anpassungsmaßnahmen. Im Prinzip muss nur die physikalische Verbindungsschicht USB (Universal Serial Bus) durch eine Bluetooth-Verbindung ersetzt werden.

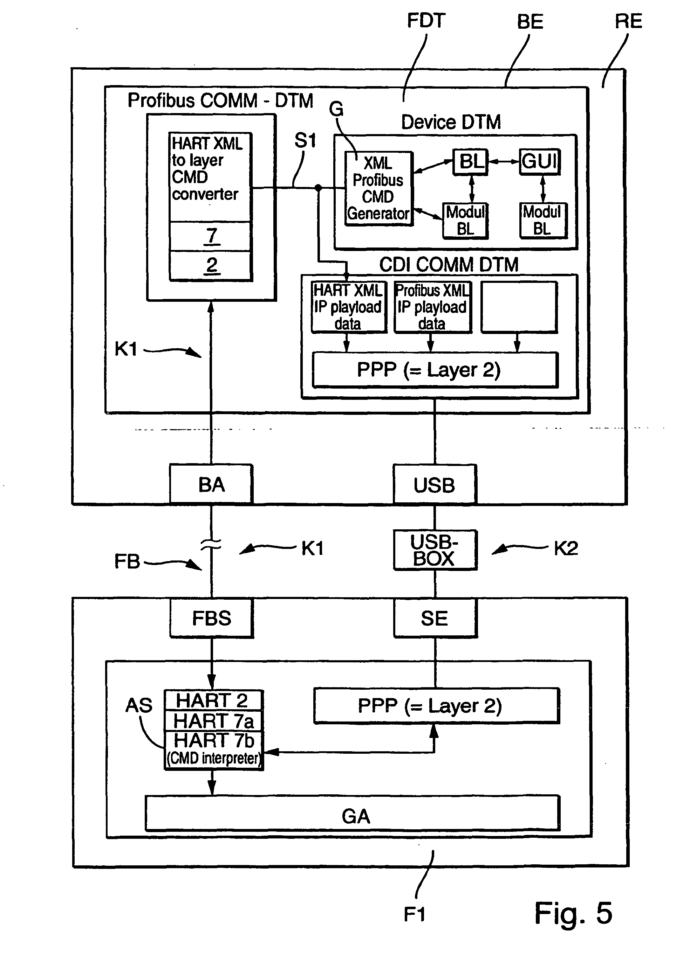

In Fig. 5 ist im Unterschied zur Darstellung in Fig. 3 ein Feldgerät mit einer HART®-Schnittstelle dargestellt.

Die Ausführungsbeispiele gemäß den Figuren 4 und 5 stellen nur mögliche Abwandlungen der Erfindung dar. Die Erfindung ist für verschiedene Feldbussysteme wie auch für verschiedene Service-Schnittstellen geeignet.

Nachfolgend ist die Funktionsweise der Erfindung näher erläutert. Der Kommunikationskanal K1 entspricht einer herkömmlichen Datenübertragung zwischen dem Bedienprogramm und der Feldgeräteapplikation GA. Die Kommunikation erfolgt über den Feldbus FB. Der Feldbus ist Teil der physikalischen Schicht 1 im OSI Modell. Neben dem Kommunikationskanal K1 steht noch der Kommunikationskanal K2 zur Datenübertragung zur Verfügung. Für diese Datenübertragung ist eine Kabelverbindung zwischen Rechnereinheit RE und dem Feldgerät F1 notwendig. Die Kabelverbindung besteht im Wesentlichen aus einem USB-Kabel und einer USB-Kommunikationseinheit USB-Box.

Die Profibus XML Dokumente werden im Kommunikations DTM "CDI Com DTM" in das Datenfeld eines Protokolls, das z.B. dem Point to Point Protokolls PPP RFC-1661 (Request For Comment) Vorgaben entspricht, verpackt. Dieses Verpacken erfolgt in der Sicherungsschicht PPP. Nach der Übertragung der verpackten XML-Dokumente zur Sicherungsschicht PPP im Feldgerät F1 werden die XML-Dokumente dort entpackt und direkt an die Profibusschicht 7b weitergeleitet, wo die entsprechenden Kommandos interpretiert und in der Feldgeräteapplikation GA ausgeführt werden.

Die Kommunikation zwischen Feldgerät F1 und Rechnereinheit RE erfolgt in entsprechend umgekehrter Weise. Über die Kommunikationsverbindung K2 können somit auch Software-Updates ins Feldgerät übertragen werden. Die Datenübertragung über die Kommunikationsverbindung K2 erfolgt unabhängig von der Datenübertragung über die Kommunikationsverbindung K1. Das heißt, es können Daten und Kommandos über beide Kanäle gleichzeitig und unabhängig voneinander übertragen werden.

Die wesentliche Idee der Erfindung besteht darin, für die Kommunikation über die Service-Schnittstelle das vom Feldgeräte DTM DTM-F1 zur Verfügung gestellte Protokoll (hier Profibus) zu verwenden und über den zweiten Kommunikationskanal K2 direkt auf die Anwendungsschicht AS des Protokolls im Feldgerät F1 zuzugreifen.

## Patentansprüche

1. Verfahren zur Datenübertragung zwischen einer Rechnereinheit (RE) und einem Feldgerät (F1) der Automatisierungstechnik, mit einem Bedienprogramm (BE), das auf der Rechnereinheit (RE) abläuft und eine komponentenbasierten Softwarearchitektur besitzt und einer Feldgeräteapplikation (GA) die in dem Feldgerät(F1) abläuft, wobei ein erster Kommunikationskanal (K1) zur Datenübertragung zwischen dem Bedienprogramm (BE) und der Feldgeräteapplikation (GA) vorgesehen ist, der eine Feldbusverbindung (FB), die nach einem Schichtenmodell mit mindesten einer physikalischen Schicht, einer Datenübertragungsschicht und einer Anwendungsschicht (7b) arbeitet, umfasst und ausgehend von einem Feldgeräte-Objekt (DTM-F1), das die Funktionalität des Feldgerätes (F1) repräsentiert und einem ersten Kommunikations-Objekt (COMM-DTM), das die Funktionalität des Feldbusverbindung repräsentiert, über den Feldbus (FB) zu einer am Feldgerät (F1) vorgesehenen Feldbusschnittstelle (FBS) führt, wobei das erste Kommunikations-Objekt (COMM-DTM) und das Feldgeräte-Objekt (DTM-F1) des Bedienprogramms über eine Schnittstelle (S1) verbunden sind, **dadurch gekennzeichnet,**
**dass** ein zweiter Kommunikationskanal (K2) zwischen Bedienprogramm (BE) und Feldgeräteapplikation (GA) vorgesehen ist, der eine logische Punkt-zu-Punkt Verbindung umfasst und ausgehend von dem Feldgeräte-Objekt (DTM-F1) über die Schnittstelle (S1) zu einem zweiten Kommunikations-Objekt **(CDI** COMM DTM) im Bedienprogramm (BE), das die Funktionalität der logischen Punkt-zu-Punkt Verbindung repräsentiert, führt und dass die logische Punkt-zu-Punkt Verbindung über eine am Feldgerät (F1) vorgesehene Serviceschnittstelle (SE) direkt auf die Anwendungsschicht (7b) der Feldbusverbindung im Feldgerät (F1) zugreift.

2. Verfahren zur Datenübertragung nach Anspruch 1, **dadurch gekennzeichnet, dass** das Feldgeräte-Objekt (DTM-F1) und die Kommunikations-Objekte (COMM-DTM, CDI COMM DTM) dem FDT/DTM-Standard entsprechen.

3. Verfahren nach einem der vorhergehenden Ansprüche, **dadurch gekennzeichnet, dass** das Bedienprogramm das Produkt FieldCare der Fa. Endress+Hauser ist.

4. Verfahren nach einem der vorhergehenden Ansprüche, **dadurch gekennzeichnet, dass** die Punkt-zu-Punkt Verbindung nach einem PPP-Protokoll arbeitet.

5. Verfahren nach einem der Ansprüche 1 bis 4, **dadurch gekennzeichnet, dass** das Feldgerät (F1) eine HART, Profibus, Foundation Fieldbus, Modbus oder RS485-Schnittstelle aufweist.

6. Verfahren nach Anspruch 5, **dadurch gekennzeichnet, dass** die Kommunikation zwischen Rechnereinheit (RE) und Feldgerät (F1) nach dem USB-Standard erfolgt.

7. Verfahren nach Anspruch 5, **dadurch gekennzeichnet, dass** die Kommunikation zwischen Rechnereinheit (RE) und Feldgerät (F1) nach dem Bluetooth-Standard erfolgt.

8. Verfahren nach Anspruch 5, **dadurch gekennzeichnet, dass** die Kommunikation zwischen Rechnereinheit (RE) und Feldgerät (F1) nach dem Infrarot-Standard erfolgt.

9. Verfahren nach Anspruch 5, **dadurch gekennzeichnet, dass** die Kommunikation zwischen Rechnereinheit (RE) und Feldgerät (F1) nach dem Firewire-Standard erfolgt.

10. Feldgerät (F1) angepasst zur Durchführung des Verfahrens nach einem der vorherigen Ansprüche

11. Rechnereinheit (RE) angepasst zur Durchführung des Verfahrens nach einem der Ansprüche 1-9.

12. Vorrichtung umfassend ein Feldgerät (F1) nach Anspruch 10 und eine Recheneinheit (RE) nach Anspruch 11 und angepasst zur Durchführung des Verfahrens nach einem der Ansprüche 1-9.

## Claims

1. Process for transmitting data between a computer unit (RE) and a field device (F1) used in automation engineering with an operating program (BE) that runs on the computer unit (RE) and has a component-based software architecture, and with a field device application (GA) that runs in the field device (F1), where a first communication channel (K1) is provided for data transmission between the operating program (BE) and the field device application (GA), where said communication channel comprises a fieldbus connection (FB) which operates based on a layer model with at least one physical layer, one data transmission layer and one application layer (7b) and, starting from a field device object (DTM-F1) which represents the functionality of the field device (F1) and starting from a first communication object (COMM- DTM) that represents the functionality of the fieldbus connection, is routed via the fieldbus (FB) to a fieldbus interface (FBS) provided at the field device (F1), where the first communication object (COMM-DTM) and the field device object (DTM-F1) of the operating program are connected via an interface (S1), **characterized in that**
a second communication channel (K2) is provided between the operating program (BE) and the field device application (GA), which comprises a logical point-to-point connection and, starting from the field device object (DTM-F1), is routed via the interface (S1) to a second communication object (CDI COMM DTM) in the operating program (BE) which represents the functionality of the logical point-to-point connection, and **in that** the logical point-to-point connection directly accesses the application layer (7b) of the fieldbus connection in the field device (F1) via a service interface (SE) provided at the field device (F1).

2. Method for transmitting data as per Claim 1, **characterized in that** the field device object (DTM-F1) and the communication objects (COMM-DTM, CDI COMM DTM) correspond to the FDT/DTM standard.

3. Method as per one of the previous Claims, **characterized in that** the operating program is the Endress+Hauser FieldCare product.

4. Method as per one of the previous Claims, **characterized in that** the point-to-point connection works on the basis of a PPP protocol.

5. Method as per one of the Claims 1-4, **characterized in that** the field device (F1) has a HART, Profibus, Foundation Fieldbus, Modbus or RS485 interface.

6. Method as per Claim 5, **characterized in that** the communication between the computer unit (RE) and the field device (F1) takes place on the basis of the USB standard.

7. Method as per Claim 5, **characterized in that** the communication between the computer unit (RE) and the field device (F1) takes place on the basis of the Bluetooth standard.

8. Method as per Claim 5, **characterized in that** the communication between the computer unit (RE) and the field device (F1) takes place on the basis of the infrared standard.

9. Method as per Claim 5, **characterized in that** the communication between the computer unit (RE) and the field device (F1) takes place on the basis of the Firewire standard.

10. Field device (F1) adapted to perform the process as per one of the previous claims.

11. Computer unit (RE) adapted to perform the process as per one of the Claims 1-9.

12. Unit comprising a field device (F1) as per Claim 10 and a computer unit (RE) as per Claim 11 and adapted to perform the process as per one of the Claims 1-9.

## Revendications

1. Procédé destiné à la transmission de données entre une unité d'ordinateur (RE) et un appareil de terrain (F1) de la technique d'automatisation, avec un programme d'exploitation (BE), qui tourne sur une unité d'ordinateur (RE) et possède une architecture logicielle orientée composants, et avec une application d'appareil de terrain (GA), qui tourne sur un appareil de terrain (F1), un premier canal de communication (K1) étant prévu pour la transmission de données entre le programme d'exploitation (BE) et l'application d'appareil de terrain (GA), qui comprend une liaison de bus de terrain (FB), qui fonctionne d'après un modèle de couches avec au moins une couche physique, une couche de transmission de données et une couche d'application (7b), et qui conduit, en partant d'un objet d'appareil de terrain (DTM-F1), qui représente la fonctionnalité de l'appareil de terrain (F1), et d'un premier objet de communication (COMM-DTM), qui représente la fonctionnalité de la liaison du bus de terrain, par le biais d'un bus de terrain (FB) vers une interface de bus de terrain (FBS) prévue sur l'appareil de terrain (F1), le premier objet de communication (COMM-DTM) et l'objet d'appareil de terrain (DTM-F1) du programme d'exploitation étant reliés par l'intermédiaire d'une interface (S1), **caractérisé en ce**
**qu'**est prévu un deuxième canal de communication (K2) entre le programme d'exploitation (BE) et l'application de bus de terrain (GA), qui comprend une liaison logique point-à-point et qui conduit, en partant de l'objet d'appareil de terrain (DTM-F1) par le biais de l'interface (S1) vers un deuxième objet de communication (CDI COMM DTM) dans le programme d'exploitation (BE), qui représente la fonctionnalité de la liaison logique point-à-point, et en ce que la liaison logique point-à-point accède par l'intermédiaire d'une interface de service (SE) prévue sur l'appareil de terrain (F1), directement à la couche d'application (7b) de la liaison de bus de terrain dans l'appareil de terrain (F1).

2. Procédé destiné à la transmission de données selon la revendication 1, **caractérisé en ce que** l'objet d'appareil de terrain (DTM-F1) et l'objet de communication (COMM-DTM, CDI COMM DTM) sont conformes à la norme FDT/DTM.

3. Procédé selon l'une des revendications précédentes, **caractérisé en ce que** le programme d'exploitation est le produit FieldCare de la sté Endress-Hauser.

4. Procédé selon l'une des revendications précédentes, **caractérisé en ce que** la liaison point-à-point fonctionne selon un protocole PPP.

5. Procédé selon l'une des revendications 1 à 4, **caractérisé en ce que** l'appareil de terrain (F1) comporte une interface HART, Profibus, Foundation Fieldbus, Modbus ou RS485.

6. Procédé selon la revendication 5, **caractérisé en ce que** la communication entre l'unité d'ordinateur (RE) et l'appareil de terrain (F1) a lieu d'après la norme USB.

7. Procédé selon la revendication 5, **caractérisé en ce que** la communication entre l'unité d'ordinateur (RE) et l'appareil de terrain (F1) a lieu d'après la norme Bluetooth.

8. Procédé selon la revendication 5, **caractérisé en ce que** la communication entre l'unité d'ordinateur (RE) et l'appareil de terrain (F1) a lieu d'après la infrarouge.

9. Procédé selon la revendication 5, **caractérisé en ce que** la communication entre l'unité d'ordinateur (RE) et l'appareil de terrain (F1) a lieu d'après la norme Firewire.

10. Appareil de terrain (F1) adapté en vue de la réalisation du procédé selon l'une des revendications précédentes.

11. Unité d'ordinateur (RE) adaptée en vue de la réalisation du procédé selon l'une des revendications 1 à 9.

12. Dispositif comprenant un appareil de terrain (F1) selon la revendication 10 et une unité d'ordinateur (RE) selon la revendication 11 et adapté en vue de la réalisation du procédé selon l'une des revendications 1 à 9.
